Europäisches Patentamt

European Patent Office

Office européen des brevets

(19)

(11) Veröffentlichungsnummer: **0 016 093**
**B1**

(12) ## EUROPÄISCHE PATENTSCHRIFT

(45) Veröffentlichungstag der Patentschrift:
19.01.83

(51) Int. Cl.³: **C 04 B 41/28**

(21) Anmeldenummer: **79900776.0**

(22) Anmeldetag: **18.07.79**

(86) Internationale Anmeldenummer:
**PCT/CH 79/00104**

(87) Internationale Veröffentlichungsnummer:
**WO 80/00249 (21.02.80 Gazette 80/4)**

(54) **Verfahren zur Herstellung von Formkörpern aus gefülltem Kunststoff.**

(30) Priorität: **21.07.78 CH 7888/78**
**13.07.79 CH 6527/79**

(43) Veröffentlichungstag der Anmeldung:
**01.10.80 Patentblatt 80/20**

(45) Bekanntmachung des Hinweises auf die Patenterteilung:
**19.01.83 Patentblatt 83/3**

(84) Benannte Vertragsstaaten:
**AT CH DE FR GB LU NL SE**

(56) Entgegenhaltungen:
**DE-A-1 908 549**
**DE-A-2 111 149**
**DE-A-2 254 146**
**FR-A-1 252 391**
**US-A-2 349 756**
**US-A-3 721 579**
**US-A-3 839 265**

(73) Patentinhaber: **GEORG FISCHER**
**AKTIENGESELLSCHAFT, Mühlentalstrasse 105,**
**CH-8201 Schaffhausen (CH)**

(72) Erfinder: **GUT, Karl, Neusatz, CH-8463 Benken (CH)**
Erfinder: **VOEGELI, Marcel, Riethaldenstieg 5,**
**CH-8200 Schaffhausen (CH)**
Erfinder: **SCHNEIDER, Haiko, Zum Leimacker 15,**
**D-7763 Oehningen 2 (DE)**

Verfahren zur Herstellung von Formkörpern aus gefülltem Kunststoff

Die Erfindung betrifft ein Verfahren zur Herstellung von Formkörpern aus gefülltem Kunststoff nach dem Oberbegriff des 1. Patentanspruches.

Verfahren gemäß dem Oberbegriff des 1. Anspruches sind bereits aus den Veröffentlichungen DE-A-2 111 149, US-A-2 349 756 und DE-A-1 908 549 bekannt. Ein noch nicht bewältigtes Problem bei solchen Verfahren besteht darin, ein Auslaufen der Reaktions(harz)masse bis zu der Enderstarrung zu verhindern. Zwar kann man die Topfzeiten der Reaktionsmasse beliebig kurz einstellen, so daß dann die Gelierung im Formling rascher vor sich geht und weniger ausläuft, aber diese Maßnahme wäre nicht wirtschaftlich, da dann die Reaktionsmasse im betreffenden Behälter, in der Vakuumkammer und in den dazwischen befindlichen Leitungen vorzeitig geliert, wodurch sie unbrauchbar wird. Andererseits ist die Viskosität der Reaktionsmasse bei längeren Topfzeiten derart niedrig, daß erhebliche Verluste durch Auslaufen aus dem Formling entstehen. Auch bei Erwärmung in einem Aushärteofen wird die Viskosität zuerst, bis eine genügende Vernetzung eintritt, noch herabgesetzt, so daß dann zusätzliche Reaktionsmasse verlorengeht, die außerdem den Ofen verunreinigt. Dadurch werden auch die Eigenschaften der mit Kunststoff gefüllten Körper, auch Kompositkörper genannt, beeinträchtigt.

Der Erfindung liegt die Aufgabe zugrunde, die eingangs erwähnten Nachteile zu vermeiden bei einer gleichzeitigen Vereinfachung und Verbilligung der Herstellung von Formkörpern. Auch sollten die Formkörper eine minimale Restporösität und eine minimale Anfälligkeit gegen flüssige Medien wie Säuren, Laugen, organische Lösungsmittel und Abwässer aufweisen.

Erfindungsgemäß wird diese Aufgabe durch die Lehre des Anspruches 1 gelöst. Vorteilhafte und/oder erfindungsgemäße Weiterbildungen sind den Unteransprüchen zu entnehmen.

Nur wenn der Füllstoff, der Vorbinder und die Reaktionsmasse qualitativ und mengenmäßig aufeinander abgestimmt sind, können optimale Eigenschaften des Kompositkörpers erreicht werden, da die Füllstoffkörner mit dem Silanhaftvermittler, dem Vorbinder und der Reaktionsmasse eine kraftschlüssige und widerstandsfähige Verbindung eingehen müssen. Durch die Versiegelung des Formlings sind die Auslaufverluste vernachlässigbar. Außerdem wird der Ofen geschont. Dabei können die Topfzeiten der zu verarbeitenden Reaktionsmassen sehr lange gewählt werden. Als Füllstoff kommt vorteilhafterweise ein staubfreier, qualitativ hochwertiger und preisgünstiger Quarzsand in Betracht. Auf jeden Fall darf kein Vorbinder durch den Füllstoff aufgesaugt werden, weil das ein Verlust an Vorbinder darstellen würde. Der Vorbinder soll die Quarzkornoberfläche aber gut benetzen. Der Vorbinder soll vorzugsweise kalthärtend sein, damit keine Erwärmungskosten entstehen. All dies kommt sowohl der Qualität des Endproduktes als auch der Wirtschaftlichkeit zugute.

Die Herstellung des offenporigen, selbsttragenden, formstabilen Formlings kann auf verschiedene, an und für sich bekannte Weisen erfolgen. So können auch die herkömmlichen und bewährten Formwerkzeuge verwendet werden. So kann der Formling durch Einschießen des Füllstoffes und des Binders mittels eines Luftstromes bzw. eines Luftstoßes in den Hohlraum eines Formwerkzeuges hergestellt werden. Durch einen chemisch ausgelösten Abbindeprozeß kann der Binder schnell aushärten, so daß der Formling dem Formwerkzeug rasch entnommen werden kann, was einen hohen Ausnutzungsgrad des Formwerkzeuges bedeutet. Bei solchen Formlingen kann ein volumetrischer Verdichtungsgrad von minimal 0,5 bis zu 0,85 ohne weiteres erreicht werden. Bei einem Verdichtungsgrad von 0,8 ist das Raumvolumen des Formlings zu 80% mit Füllstoff ausgefüllt, so daß dann nur noch das Porenvolumen von 20% mit Reaktionsharzmasse ausgefüllt werden muß. Da die Harzmasse teurer ist als z. B. Sand als Füllstoff, ist dieser kleine Anteil, von den Bestandteilen her betrachtet, kostengünstig.

Einer Vakuum-Druckimprägnieranlage kann eine handelsübliche UV-Strahlenquelle nachgeschaltet werden. Obwohl Acrylate auch mit UV reagieren, sind sie als weniger geeignet anzusehen, da sie spröder sind. Die Verwendung von Kondensationsharze, z. B. Fenolformaldehyd und Additionsharze, z. B. Epoxyd, kommen bei einer UV-Strahlenquelle nicht in Betracht. Mit ungesättigten Polyesterharzen, die noch bedeutend billiger sind als Epoxyd, können die besten Ergebnisse erwartet werden.

Um zeitunabhängig zu werden und zur Verbesserung des Endprodukts kann mit Vorteil eine Tauchflüssigkeit angewendet werden, die bezüglich Dichte etwa der Dichte der Reaktionsmasse entspricht. Damit ist es nicht unbedingt notwendig, die mit Reaktionsmasse durchfluteten Formlinge unmittelbar nach dem Entnehmen aus der Vakuum-Imprägnierkammer der UV-Strahlenquelle zuzuführen. Erwünscht ist es aber, da Versuche gezeigt haben, daß die Reaktionsmasse unter UV-Einfluß mit dem Luftsauerstoff innerhalb kürzester Zeit eine schwierig zu beseitigende Klebrigkeit herbeiführen, die völlig vermieden wird, wenn die UV-Bestrahlung im Bad stattfindet. Die Flüssigkeit muß indifferent sein gegenüber der Reaktionsmasse und transparent für UV-Strahlen, so daß die Versiegelung der Poren bzw. die Gelierung der äußeren Reaktionsmasse-Schichten durch die UV-Strahlen im Flüssigkeitsbehälter möglich ist. Geeignet sind Glykol und Glycerine, deren Mischung genau auf die Dichte der Reaktionsmasse abgestimmt werden kann.

Weitere Vorteile liegen einerseits im Fehlen einer Schwindung während des Aushärtens des Kompositkörpers, anderseits im Fehlen einer Restschwindung, gemessen in einem Zeitraum von 2 – 250 Tagen nach der Herstellung.

Der erfindungsgemäß hergestellte Kompositkörper besitzt überdies eine außerordentlich gute Beständigkeit in vielen anorganischen Chemikalien wie wäßrigen Säuren, Basen und Salzen. Auch organische Chemikalien — mit Ausnahme bestimmter Lösungsmittel — führen zu keiner Schädigung. Sowohl als Vorbinder als auch als Reaktionsharzmasse kann dieselbe Art Duroplast verwendet werden. Ein Totalanteil an Duroplast von etwa 20% (Gew.) kann so hergestellt werden.

Als Füllstoff zur erfindungsgemäßen Herstellung von Kompositkörpern haben sich besonders teilchenförmige, spröde, mineralische Stoffe, vorzugsweise Quarz, aber auch Basalt, Chromerz, Zirkonsilikat, Schiefer, Glimmer, Calciumcarbonat, Schamotteporös, Olivin, Glas, Eisengries, -pulver, -oxid, Aluminiumgries, -pulver, -oxid, Magnetit, Bariumferrit, Ruß, Graphit, Kaolin, Kreide, Kaliumtitanat und Gießereischlacke als geeignet erwiesen. Aber auch organische Stoffe, wie z. B. gemahlenes Holzmehl, Kokosnußschalen, Kork, können u. U. zur Anwendung kommen. Auch faserförmige Teilchen wären geeignet, z. B. Glasfasern, Metallfasern wie Stahlwolle, Polypropylenfasern und Holzfasern.

Es hat sich gezeigt, daß die Festigkeit der erfindungsgemäß hergestellten Körper mit von der Korngröße bzw. der Korngrößenverteilung der verwendeten Füllstoffe abhängt. Für jede Zusammensetzung der Füllstoffe ist daher eine optimale Grenzkorngröße zu verwenden, die in Wechselwirkung mit den benutzten Bindern einen höchstmöglichen Verfestigungsfaktor für die Körper nach der Erfindung ergeben. Zur weiteren Erhöhung der Zugfestigkeit können silanisierte Füllmittel eingesetzt werden.

Im allgemeinen kommt ein Korngrößenbereich, für mindestens 90 Gew.-% des Füllstoffes, zwischen 10 μm und maximal einem Drittel der dünnsten Wandstärke des Formkörpers in Frage.

Die verwendeten Füllstoffe können sowohl etwa kugelförmig, wie z. B. Sandkörner, als auch faserförmig sein, je nach gewünschter Zugfestigkeit.

Als nicht-hydraulische Vorbinder kommen beispielsweise folgende Stoffe in Betracht:

Wasserglas, das nachfolgend mit $CO_2$ begast wird, Furanharz (thermisch oder katalytisch), Harnstoff-Melaminharz, Vinylacetat-Harz, Phosphornitrilchlorid, Sulfitablauge und Leinöl, Isocyanate, Isocyanat mit Resol, Isocyanat mit Melamin, γ-Strahlen ausgehärtete, ungesättigte Polyesterharze, Phosphorsäure mit Aluminiumoxid oder Monoaluminiumphosphat, Phenolharz, Acrylatharz, Harz in Lösungsmittel, Styropor in Toluol, Silester.

Der Binderanteil solite max. 10 Gew.-%, vorzugsweise in minimaler Konzentration, d. h. weniger als 2 Gew.-%, bezogen auf den Formling, betragen, um die Formstabilität bei Manipulationen und beim Füllen mit Reaktionsharzmasse zu gewährleisten. Bei Verwendung silanisierter Füllstoffe sollte auf Kompatibilität mit dem Binder geachtet werden. Der Vorbinder kann silanisiert sein. Auch bei Verwendung wasserhaltiger Binder sollte der Gehalt an chemisch oder physikalisch gebundenem Wasser im offenporigen Formling, vorzugsweise Null, max. 1 Gew.-% betragen, um die nachfolgende Aushärtung des Reaktionsharzes nicht zu stören.

Den Reaktionsharzen können die üblichen Zusätze wie Katalysatoren, Beschleuniger, Stabilisatoren, Farbstoffe, Lichtschutzmittel, Haftvermittler, Gleitmittel, Thixotropiermittel usw. zugesetzt werden. Die Aushärtung bzw. Vernetzung sollte unter Ausnutzung von Druck und/oder Temperatur durch Polyaddition am Vorbinder bzw. Polykondensation am Vorbinder oder Radikalpolymerisation stattfinden.

Es kann sehr vorteilhaft sein, wenn der Formling vor dem Ausfüllen mit der Reaktionsharzmasse erwärmt wird, damit das eingearbeitete flüssige Harz zur Aushärtung bzw. zum Gelieren gebracht wird. Auch kann die Reaktionsharzmasse zweckmäßigerweise gekühlt werden, um lange Topfzeiten zu erhalten. Der Gelierprozeß kann am besten in einem temperierten Medium und vorzugsweise unter erhöhtem Druck ablaufen.

Die Eigenschaften der neuen Kompositkörper sind bei dem bereits erwähnten hohen Anteil an Füllstoff und dessen hohen Verdichtungsgrad zu einem großen Teil durch dessen spezifische Eigenschaften bestimmt. Dementsprechend können durch geeignete Wahl des Füllstoffes auch Körper mit erhöhter Dielektrizitätskonstante, mit bestimmtem ohmschem Widerstand, mit magnetischen Eigenschaften oder mit bestimmter Wärmekapazität hergestellt werden.

Die Anwendungsmöglichkeiten der erfindungsgemäß hergestellten Kompositkörper sind äußerst vielfältig, decken sich weitgehend mit denen von Kunstharzbeton und umfassen folgende Gegenstände:

Kupplungsseildämpfer, Straßenkappen, Isolatoren, Rohre, Eisenbahnschwellen, Kilometersteine, Grenzmarkierungen, Leitmarken, Zaunpfähle, -latten, Drainageleitungen, Kabelkanäle, Profilteile für die Bachbettregulierung, Segmente für den Klärbeckenbau, Schächte, Tassen, Abwasserrohre, Sammelbecken für Abwässer, Senkkästen, Kanaldeckel, Ausgleichskeile, Brückenwiderlager, Wannen, Fassaden, Wandelemente, Flachdachelemente, Fensterrahmen, Fensterbänke, Sockelleisten, Radiator-Abdeckplatten, Türrahmen, Sockel, Maschinenfundamente, abriebfeste Platten, Bodenbeschichtungen, Treppenstufen, Dekorverkleidungen, Tischplatten, Deckenelemente, Wasch-Spülbecken, Toiletten, Brausetassen, Spülwasserbehälter, Futtertröge, Grabmäler, kunstgewerbliche Erzeugnisse, Zahnräder, Rollen, z. B. Rollschuhrollen, Ziegelsteine, Blumentöpfe, Podeste, Bordsteine, Vasen, Sitzbänke, Pflanzenkübel, Gehäuse, Kurvenscheiben, Pfannenstiele, Deckelknöpfe, Schalen, Sicherungen, Kunststeine, Dielektrika, Fliesen, Kacheln, Pflastersteine, Behälter, Wasserbecken, Aschenbecher, Bachschalen.

Im nachstehenden Beispiel beziehen sich sämtliche Prozentangaben auf den fertig ausgehärteten Kompositkörper.

### Beispiel

760 g oder 60 Vol.-% Quarzsand werden mit 10 g eines Binders, der Phenolformaldehydharz, Isocyanatharz und einen Katalysator enthält, vermischt und auf herkömmliche Weise in ein Formwerkzeug gebracht. Der so entstandene Formling wird auf 80°C erwärmt und in einer Vakuumkammer evakuiert. 240 g einer Reaktionsharzmasse eines ungesättigten Polyesterharzes, das hauptsächlich Polylite 8007® und dazu einen Katalysator, einen Initiator und einen UV-Sensibilisator enthält, werden dem Formling zugeführt. Beim Mischen der Reaktionsharzmasse-Bestandteile können eventuelle Luftblasen durch Vakuum entfernt werden. Der mit Reaktionsharzmasse durchflutete Formling wird anschließend in ein Glykolbad transferiert und anschließend einige Minuten UV-bestrahlt. Die Gelierung der inneren Schichten dauert mehrere Stunden, in der Größenordnung von 10 Stunden. Sie kann bei einer niedrigen Temperatur, z. B. −10°C, an einer Lagerstelle erfolgen. Während der Lagerung kann sich die Reaktionsmasse vernetzen, was am besten bei Raumtemperatur oder niedriger Temperatur erfolgt, damit vermieden wird, daß die Masse sich ausdehnt und die Versiegelungshülle zerbricht. Die Endaushärtung erfolgt bei z. B. 40°C während 4 Stunden.

Der derart hergestellte Körper wies folgende Eigenschaften auf:

| | |
|---|---|
| Füllstoffgehalt | 78,5 Gew.-% |
| Bindergehalt | 1,0 Gew.-% |
| Duroplastgehalt | 20,5 Gew.-% |
| Zugfestigkeit | 25 N/mm² |
| Elastizitätsmodul | $2,6 \times 10^3$ N/mm² |
| Lineare Schwindung | <0,1% |
| Reißdehnung | 1,1% |
| Wasseraufnahme bei Raumtemperatur nach 60 Tagen | 0,5% |

Eine Benutzung eines Vorbinders, der aus Phosphorsäure und Aluminiumoxid besteht, ist möglich, ist aber nicht optimal.

Eine Verbesserung der Eigenschaften eines Kompositkörpers ist durch Verstärkungseinlagen und oder Verankerungen, z. B. aus Metall, zu bewerkstelligen.

### Patentansprüche

1. Verfahren zur Herstellung von Formkörpern, aus gefülltem Kunststoff, wobei ein Gemisch eines teilchenförmigen Füllstoffs mit einem Vorbinder verformt, ausgehärtet und der erhaltene offenporige, selbsttragende Formling unter Vakuum und gegebenenfalls durch Überdruck mit einer flüssigen Reaktionsmasse gefüllt und anschließend ausgehärtet wird, dadurch gekennzeichnet, daß man den offenporigen Formling in eine Flüssigkeit taucht, die etwa die Dichte der Reaktionsmasse aufweist und vor der Endaushärtung die Poren des Formlings durch Bestrahlung mit UV-Strahlen versiegelt.

2. Verfahren nach Anspruch 1, dadurch gekennzeichnet, daß die Flüssigkeit aus Glykol und/oder aus Glyzerin besteht.

3. Verfahren nach Anspruch 1 und 2, dadurch gekennzeichnet, daß Verstärkungseinlagen z. B. aus Metall in den Formling eingelegt werden.

4. Verfahren nach den Ansprüchen 1 bis 3, dadurch gekennzeichnet, daß die Bestrahlung im Flüssigkeitsbad erfolgt.

### Claims

1. Method for producing molded bodies of filled plastic materials by forming a mixture of particulate filling materials with a pre-binding agent, that is being hardened, the obtained openporous, self-supporting molded body being filled with a liquid reaction material under vacuum and possibly by overpressure and is, thereafter, being hardened, characterized in that the openporous molded body is being dipped into a liquid, the density of which being approximately that of the reaction material, and that the pores of the molded body are sealed by ultra-violet radiation before the final hardening.

2. Method according to claim 1, characterized in that the liquid consists fo glycol and/or glycerin.

3. Method according to claim 1 and 2, characterized in that reinforcement inserts, e. g. of metal, are placed in the molded body.

4. Method according to claims 1 through 3, characterized in that the radiation is being carried out in the liquid bath.

### Revendications

1. Procédé pour fabriquer des articles moulés à partir d'une matière plastique chargée, selon lequel on déforme un mélange d'une charge sous forme de particules avec un liant préalable, on le durcit et on remplit avec une masse réactionnelle liquide la briquette autoportante obtenue, à pores ouverts, sous-vide et éventuellement en appliquant une surpression, et on la fait ensuite durcir, caractérisé en ce qu'on immerge la briquette à pores ouverts dans un liquide qui possède approximativement la densité de la masse réactionnelle, et qu'avant le durcissement final, on scelle les pores de la briquette par irradiation avec des rayons ultra-violets.

2. Procédé selon la revendication 1, caractérisé en ce que le liquide est constitué par du glycol et/ou de la glycérine.

3. Procédé selon les revendications 1 et 2, caractérisé en ce que des inserts de renforcement, par exemple métalliques, sont introduits dans la briquette.

4. Procédé selon les revendications 1 à 3, caractérisé en ce que l'irradiation s'effectue dans le bain de liquide.